# EUROPÄISCHE PATENTSCHRIFT

(11) **EP 1 471 222 B1**
(45) Veröffentlichungstag und Bekanntmachung des Hinweises auf die Patenterteilung: **15.10.2008**
(21) Anmeldenummer: 04101084.4
(22) Anmeldetag: 17.03.2004
(51) Int. Cl.: F01N 11/00, F02D 41/02, F01N 3/08, F02D 41/14

(54) **Regenerationsverfahren für einen Speicherkatalysator einer Brennkraftmaschine**
Regeneration method for a storage catalyst of an internal combustion engine
Procédé de régénération d'un catalyseur de stockage pour moteur à combustion interne

(30) Priorität: 22.04.2003 DE 10318213
(43) Veröffentlichungstag der Anmeldung: 27.10.2004
(73) Patentinhaber: Continental Automotive GmbH, 30165 Hannover (DE); Daimler AG, 70327 Stuttgart (DE)
(72) Erfinder: Franz, Jens, 70327, Stuttgart (DE); Hofmann, Uwe, 64385, Reichelsheim (DE); Ludwig, Wolfgang, 35510, Butzbach-Maibach (DE); Schwarz, Roland, 93173, Wenzenbach (DE)

(56) Entgegenhaltungen:
- US-B1- 6 497 092
- US-B2- 6 499 291

## Beschreibung

Die Erfindung betrifft ein Regenerationsverfahren für einen Speicherkatalysator einer Brennkraftmaschine gemäß dem Anspruch 1.

Moderne Brennkraftmaschinen weisen zur Abgasreinigung einen geregelten Dreiwegekatalysator und einen NOₓ-Speicherkatalysator auf. Der Dreiwegekatalysator wird auch als TWC-Katalysator (engl. TWC - Three-Way-Catalyst) bezeichnet und dient als Vorkatalysator zur Reduktion von Kohlenmonoxid und Kohlenwasserstoff im Abgas der Brennkraftmaschine. Der NOₓ-Speicherkatalysator ist dagegen stromabwärts hinter dem TWC-Katalysator angeordnet und hat die Aufgabe, im überstöchiometrischen Betrieb Stickoxide aus dem Abgas aufzunehmen und zwischenzuspeichern.

Das Speichervermögen des NOₓ-Speicherkatalysators ist jedoch begrenzt, so dass der NOₓ-Speicherkatalysator rechtzeitig vor der Erschöpfung seines Speichervermögens regeneriert werden muss, um einen Durchschlag des NOₓ-Speicherkatalysators zu verhindern, da dies zu einem Anstieg der NOₓ-Emissionen führen würde.

Die Regeneration des NOₓ-Speicherkatalysators kann bekanntermaßen durch eine vorübergehende Anfettung der Gemischzusammensetzung der Brennkraftmaschine erfolgen, so dass die gespeicherten Stickoxide in weniger umweltschädliche Verbindungen wie N₂ und H₂O umgewandelt werden.

Problematisch an derartigen Abgasreinigungsanlagen mit einem NOₓ-Speicherkatalysator ist die Tatsache, dass der NOₓ-Speicherkatalysator mit zunehmender Betriebsdauer an Speichervermögen verliert. Dieser Verlust an Speichervermögen be ruht zum einen auf einer Vergiftung des NOₓ-Speicherkatalysators durch den in handelsüblichen Kraftstoffen heute noch enthaltenen Schwefel und zum anderen auf einer thermischen Alterung des NOₓ-Speicherkatalysators.

So entstehen bei der Verbrennung von schwefelhaltigem Kraftstoff insbesondere im Magerbetrieb Schwefeloxide, die in dem NOₓ-Speicherkatalysator wie Stickoxide an der katalytisch aktiven Oberfläche gebunden und eingespeichert werden. Die auf diese Weise in dem NOₓ-Speicherkatalysator eingespeicherten Schwefelverbindungen sind jedoch chemisch wesentlich stabiler als die NOₓ-Verbindungen, so dass die eingespeicherten Schwefelverbindungen bei der üblichen Regeneration des NOₓ-Speicherkatalysators nicht aus dem NOₓ-Speicherkatalysator entfernt werden. Durch die während der Betriebsdauer zunehmende Einlagerung von Schwefeloxiden in dem NOₓ-Speicherkatalysator verringert sich also ständig das absolute NOₓ-Speichervermögen des NOₓ-Speicherkatalysators.

Es ist deshalb bekannt, im Rahmen einer Alterungsadaption das NOₓ-Speichervermögen des NOₓ-Speicherkatalysators zu ermitteln, damit während des normalen Betriebs eine rechtzeitige Regenerierung des NOₓ-Speicherkatalysators erfolgt, bevor dessen NOₓ-Speichervermögen ausgeschöpft ist.

Ein bekanntes Verfahren zur Bestimmung des Speichervermögens des NOₓ-Speicherkatalysators beruht auf dem sogenannten Regenerationsmittelintegral, d.h. dem während der Regeneration bis zu einem Fettsprung einer stromabwärts nach dem NOₓ-Speicherkatalysator angeordneten Abgassonde zur Verfügung gestellten Regenerationsmittel. Bei dem sogenannten Regenerationsmittel handelt es sich um den Anfettungsüberschuss im Abgas der Brennkraftmaschine, der in dem NOₓ-Speicherkatalysator zur NOₓ-Regeneration führt. Hierbei wird davon ausgegangen, dass das Regenerationsmittelintegral proportional der zuvor eingespeicherten NOₓ-Menge ist. Eine Verringerung des Regenerationsmittelintegrals deutet dann auf eine alterungs bedingte Abnahme des NOₓ-Speichervermögens des NOₓ-Speicherkatalysators hin.

Bei einem anderen Verfahren zur Bestimmung des alterungsabhängigen Speichervermögens des NOₓ-Speicherkatalysators wird das NOₓ-Konzentrationsgefälle über dem NOₓ-Speicherkatalysator zum Zeitpunkt der Regenerationseinleitung ausgewertet, wobei aus dem NOₓ-Konzentrationsgefälle der Beladungsgrad des NOₓ-Speicherkatalysators und daraus wiederum die absolute NOₓ-Beladung ermittelt wird. Anhand eines physikalischen Modells wird zusätzlich für einen nicht gealterten NOₓ-Speicherkatalysator die eingespeicherte NOₓ-Menge berechnet. Der aus dem Konzentrationsgefälle ermittelte Wert für die NOₓ-Beladung wird dann mit dem modellierten Wert für die NOₓ-Beladung verglichen, wobei die Differenz zwischen diesen beiden Werten den alterungsbedingten Verlust an Speichervermögen wiedergibt.

Die beiden vorstehend beschriebenen Verfahren zur Bestimmung des Alterungszustandes des NOx-Speicherkatalysators haben jedoch zur Voraussetzung, dass der NOₓ-Speicherkatalysator zu Beginn des Verfahrens vollständig regeneriert ist. Dies bedeutet, dass keine Stickoxide mehr an den katalytisch aktiven Oberflächen des NOₓ-Speicherkatalysators gebunden sind. Diese vollständige Entleerung vor der Bestimmung des Alterungszustandes des NOₓ-Speicherkatalysators ist wichtig, da eine Restbeladung des NOₓ-Speicherkatalysators mit Stickoxiden ansonsten fälschlicherweise als Schwefelvergiftung oder thermische Alterung bewertet würde.

Bei den bekannten Verfahren zur Regeneration des NOₓ-Speicherkatalysators erfolgt jedoch in der Regel keine vollständige Regeneration des NOₓ-Speicherkatalysators, da die Regeneration bereits bei einer Detektion eines Fettsprunges im Abgas der Brennkraftmaschine beendet wird, wohingegen der NOₓ-Speicherkatalysator zu diesem Zeitpunkt in der Regel noch nicht vollständig entleert ist. Dieser Abbruch der Regeneration bei einem Fettsprung im Abgas einer Brennkraftmaschine ist notwendig, um einen Durchbruch von Kohlenwasserstoffen zuverlässig zu vermeiden, da die Kohlenwasserstoffkonzentration im Abgas der Brennkraftmaschine nach dem NOₓ-Speicherkatalysator bei einem länger andauernden unterstöchiometrischen Betrieb übermäßig ansteigt.

Nachteilig an dem bekannten Regenerationsverfahren für einen NOₓ-Speicherkatalysator ist also die Tatsache, dass der NOₓ-Speicherkatalysator in der Regel nur unvollständig entleert wird, was bei einer nachfolgenden Bestimmung des Alterungszustandes des NOₓ-Speicherkatalysators zu Fehlern führt.

Die US 6 497 092 B1 offenbart ein Regenerationsverfahren für einen Speicherkatalysator, wobei vorgeschlagen wird, dass das alterungsbedingte Speichervermögen des Speicherkatalysators ermittelt wird, wenn der ermittelte Regenerationsgrad des Speicherkatalysators einen vorgegebenen Minimalwert überschreitet. Weiterhin wird offenbart, dass nach der Regeneration des Speicherkatalysators der Regenerationsgrad des Speicherkatalysators ermittelt wird.

Der Erfindung liegt deshalb die Aufgabe zugrunde, ein Regenerationsverfahren für einen Speicherkatalysator zu schaffen, das Fehler bei einer anschließenden Bestimmung des Alterungszustandes vermeidet.

Diese Aufgabe wird, ausgehend von dem eingangs beschriebenen bekannten Regenerationsverfahren gemäß dem Oberbegriff des Anspruchs 1, durch die kennzeichnenden Merkmale des Anspruchs 1 gelöst.

Die Erfindung umfasst die allgemeine technische Lehre, bei der Regeneration des Speicherkatalysators den Regenerationsgrad zu ermitteln.

Falls die Ermittlung des Regenerationsgrads des Speicherkatalysators eine unvollständige Regeneration ergibt, so besteht im Rahmen der Erfindung die Möglichkeit, die Regeneration des Speicherkatalysators zu vervollständigen, um bei der Bestimmung des Alterungszustandes des Speicherkatalysators Fehler zu vermeiden.

Alternativ hierzu bietet die erfindungsgemäße Ermittlung des Regenerationsgrads des Speicherkatalysators auch die Möglichkeit, nur dann den Alterungszustand des Speicherkatalysators zu ermitteln, wenn dieser vollständig regeneriert ist. Bei einer nur unvollständigen Regeneration des Speicherkatalysators kann dagegen auf eine Bestimmung des Alterungszustandes verzichtet werden.

Vorzugsweise erfolgt die Regeneration des Speicherkatalysators und die gegebenenfalls erforderliche Vervollständigung der Regeneration des Speicherkatalysators durch einen Betrieb der Brennkraftmaschine mit einem unterstöchiometrischen Lufverhältnis λ, d.h. mit einer Gemischanfettung. Bei einem derartigen unterstöchiometrischen Betrieb werden die in dem Speicherkatalysator gespeicherten Stickstoffverbindungen von der katalytisch aktiven Oberfläche des Speicherkatalysators gelöst und in unschädliche chemische Verbindungen umgewandelt, wie N₂ und H₂O.

Die Erfindung ist jedoch hinsichtlich der Regeneration des Speicherkatalysators nicht auf eine Gemischanfettung beschränkt, sondern auch mit anderen Regenerationsverfahren realisierbar.

Zur Messung des Regenerationsgrads des Speicherkatalysators wird vorzugsweise die Sauerstoffkonzentration im Abgas der Brennkraftmaschine während der Regeneration des Speicherkatalysators gemessen.

Hierzu kann beispielsweise eine Abgassonde eingesetzt werden, die zwischen der Brennkraftmaschine und einem Vorkatalysator angeordnet ist. Es besteht jedoch alternativ auch die Möglichkeit, dass zur Messung der Sauerstoffkonzentration im Abgas der Brennkraftmaschine eine Abgassonde eingesetzt wird, die zwischen dem Vorkatalysator und dem Speicherkatalysator angeordnet ist. Schließlich besteht auch die Möglichkeit, die Sauerstoffkonzentration stromabwärts des Speicherkatalysators durch eine Abgassonde zu messen. Die Erfindung ist also hinsichtlich des Messpunktes für die Messung der Sauerstoffkonzentration als Grundlage für die Ermittlung des Regenerati onsgrades des Speicherkatalysators nicht auf einen bestimmen Messpunkt beschränkt.

Die auf diese Weise gemessene Sauerstoffkonzentration wird dann vorzugsweise mit einem als Fettschwelle bezeichneten Grenzwert verglichen, um einen sogenannten Fettsprung im Abgas der Brennkraftmaschine erkennen zu können. Ein derartiger Fettsprung zeichnet sich durch einen signifikanten Abfall der gemessenen Sauerstoffkonzentration aus.

In der bevorzugten Ausführungsform der Erfindung wird die Erkenntnis ausgenutzt, dass während längerer Homogenphasen der Brennkraftmaschine eine vollständige Regeneration des Speicherkatalysators ohne eine unzulässige Erhöhung der Kohlenwasserstoffemissionen stattfindet. Es wird deshalb vorzugsweise während der Homogenphasen der Brennkraftmaschine überprüft, ob aufgrund der jeweiligen Betriebszustände (z.B. Volllastanreicherung der Brennkraftmaschine) eine vollständige Regeneration des Speicherkatalysators stattfindet. Falls dies der Fall ist, so kann während eines folgenden Magerbetriebs der Brennkraftmaschine mit einen überstöchiometrischen Luftverhältnis eine Bestimmung des Alterungszustandes des Speicherkatalysators erfolgen. Hierzu wird vorzugsweise die Zeitspanne ab dem Überschreiten der Fettschwelle gemessen und mit einem vorgegebenen Grenzwert verglichen. Beim Überschreiten des Grenzwerts kann dann davon ausgegangen werden, dass der Speicherkatalysator vollständig regeneriert wurde, wohingegen ein Unterschreiten des Grenzwerts auf eine unvollständige Regeneration hindeutet.

Der durch den Homogenbetrieb der Brennkraftmaschine verursachte Regenerationsgrad des Speicherkatalysators hängt jedoch nicht nur davon ab, wie lange der Homogenbetrieb nach dem Überschreiten der Fettschwelle fortgesetzt wird, sondern wird auch von anderen Betriebsparametern der Brennkraftmaschine beeinflusst, wie beispielsweise dem Luftverhältnis während des Homogenbetriebs oder dem Luftmassenstrom. So nimmt die Regenerationsgeschwindigkeit mit steigendem Luftverhältnis ab, da ein fettes Gemisch die Regeneration beschleunigt. Der vorgegebene Grenzwert für die Beurteilung des Regenerationsgrads wird deshalb vorzugsweise in Abhängigkeit von Betriebsparametern der Brennkraftmaschine festgelegt.

Während des Magerbetriebs wird dann vorzugsweise überprüft, ob die vorangegangene Regeneration des Speicherkatalysators vollständig war.

Falls dies der Fall ist, so erfolgt eine Bestimmung des Alterungszustandes des Speicherkatalysators.

Falls dagegen während des Magerbetriebs festgestellt wird, dass die Regeneration des Speicherkatalysators während des vorangegangenen Homogenbetriebs nur unvollständig war, so kann zunächst keine Bestimmung des Alterungszustandes erfolgen, da die Restbeladung des Speicherkatalysators dabei zu Fehlern führen würde.

Es wird dann zunächst überprüft, ob die sonstigen Bedingungen für eine Bestimmung des Alterungszustandes des Speicherkatalysators erfüllt sind.

Falls die Voraussetzungen für eine Bestimmung des Alterungszustandes des Speicherkatalysators gegeben sind, so wird die Regeneration des Speicherkatalysators vorzugsweise zunächst vervollständigt, um bei der anschließenden Bestimmung des Alterungszustandes Fehler zu vermeiden. Falls die Voraussetzungen für eine Bestimmung des Alterungszustandes des Speicherkatalysators dagegen nicht erfüllt sind, so erfolgt erfindungsgemäß auch keine Vervollständigung der Regeneration des Speicherkatalysators.

Bei der Ermittlung der Voraussetzungen für eine Alterungsbestimmung des Speicherkatalysators können verschiedene Betriebsparameter der Brennkraftmaschine ausgewertet werden, wie beispielsweise die Temperatur des Speicherkatalysators, das Luftverhältnis der Brennkraftmaschine, der Umgebungsdruck oder die Fahrgeschwindigkeit eines von der Brennkraftmaschine angetriebenen Kraftfahrzeugs.

Darüber hinaus kann die Zahl der Alterungsadaptionen während eines Fahrzyklus auf einen vorgegebenen Maximalwert begrenzt werden, da jede Alterungsadaption mit einer Verschlechterung des Kraftstoffverbrauchs und zusätzlichen Abgasemissionen sein kann. Bei dem erfindungsgemäßen Verfahren wird deshalb vorzugsweise die Anzahl der Alterungsadaptionen mitgezählt, wobei eine Alterungsadaption gesperrt wird, falls die Zahl der bereits erfolgten Alterungsadaptionen den vorgegebenen Maximalwert erreicht hat.

Ferner führt auch die Vervollständigung der Regeneration des Speicherkatalysators (z.B. durch eine aktiv eingeleitete Homogenphase) zu einer Erhöhung des Kraftstoffverbrauchs und evtl. zu zusätzlichen Abgasemissionen. Es kann deshalb auch die Anzahl der Vervollständigungen der Regeneration des Speicherkatalysators auf einen vorgegebenen Maximalwert begrenzt werden, um einen übermäßigen Anstieg des Kraftstoffverbrauchs zu vermeiden. Bei dem erfindungsgemäßen Verfahren wird deshalb vorzugsweise mitgezählt, wie oft die Regeneration des Speicherkatalysators aktiv vervollständigt wird, wobei die aktive Vervollständigung der Regeneration gesperrt wird, falls die Zahl der bereits erfolgten Vervollständigungen den vorgegebenen Maximalwert erreicht hat.

Die Erfindung ist nicht auf die Realisierung im Zusammenhang mit dem eingangs erwähnten Speicherkatalysator beschränkt, sondern auch vorteilhaft bei anderen Typen von Speicherkatalysatoren anwendbar, die regelmäßig einer Regeneration bedürfen.

Andere vorteilhafte Weiterbildungen der Erfindung sind in den abhängigen Ansprüchen der Erfindung gekennzeichnet oder werden nachstehend zusammen mit der Beschreibung des bevorzugten Ausführungsbeispiels anhand der Figuren näher erläutert. Es zeigen:
- Figur 1: eine schematische Darstellung einer Brennkraftmaschine mit einer erfindungsgemäßen Abgasreinigungsanlage sowie
- Figur 2a-c: das erfindungsgemäße Regenerationsverfahren in Form eines Flussdiagramms.

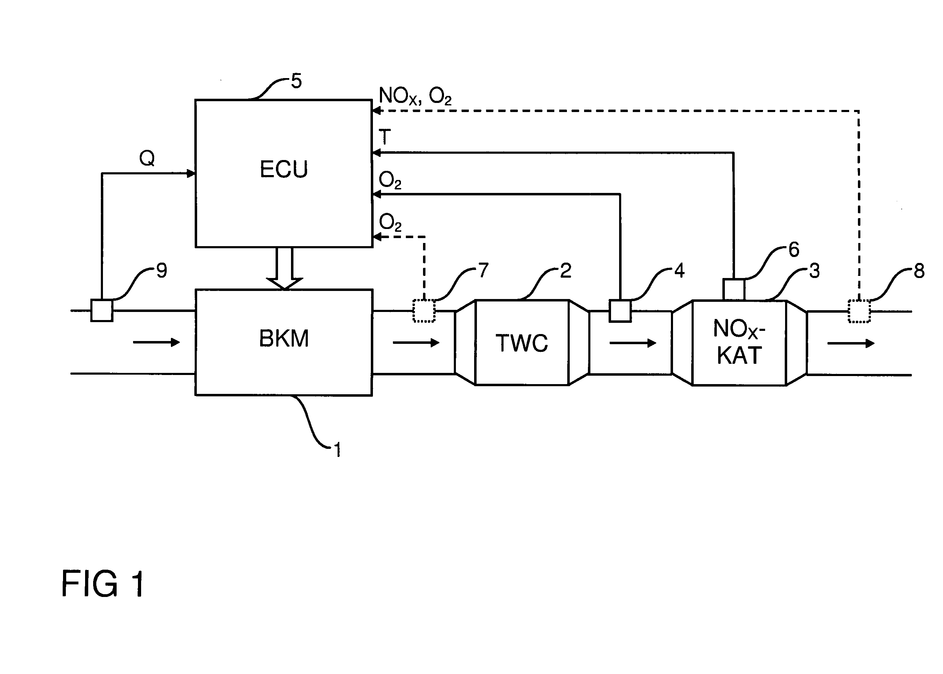

Die schematische Darstellung in Figur 1 zeigt in stark vereinfachter Form eine Brennkraftmaschine 1 mit einer Abgasreinigungsanlage, wobei die Abgasreinigungsanlage einen Dreiwegekatalysator (engl. TWC - Three-Way-Catalyst) sowie einen stromabwärts des Dreiwegekatalysators 2 angeordneten NOₓ-Speicherkatalysator 3 umfasst.

Der Dreiwegekatalysator 2 dient hierbei zur Reduzierung der Kohlenwasserstoff- und Kohlenmonoxidkonzentration im Abgas, während der NOₓ-Speicherkatalysator 3 die Aufgabe hat, im überstöchiometrischen Betrieb Stickoxide aus dem Abgas aufzunehmen und zwischenzuspeichern.

Darüber hinaus weist die Abgasreinigungsanlage eine Abgassonde 4 auf, die in einem Abgaskanal zwischen dem Dreiwegekatalysator 2 und dem NOₓ-Speicherkatalysator 3 angeordnet ist und die Sauerstoffkonzentration im Abgas misst. Ausgangsseitig ist die Abgassonde 4 mit einer elektronischen Motorsteuerung 5 (engl. ECU - Electronic Control Unit) verbunden, welche die Brennkraftmaschine 1 ansteuert bzw. die Gemischzusammensetzung der Brennkraftmaschine 1 vorgibt.

Ferner weist die Abgasreinigungsanlage einen Temperatursensor 6 auf, der an oder vor dem NOₓ-Speicherkatalysator 3 angebracht ist und die Temperatur des NOₓ-Speicherkatalysators 3 misst oder deren Bestimmung zumindest mittelbar ermöglicht, wobei der Temperatursensor 6 ausgangsseitig ebenfalls mit der elektronischen Motorsteuerung 5 verbunden ist.

In einer Variante der Erfindung weist die Abgasreinigungsanlage eine Abgassonde 7 auf, die in einem Abgaskanal zwischen der Brennkraftmaschine 1 und dem Dreiwegekatalysator 2 angeordnet ist und die die Sauerstoffkonzentration im Abgas der Brennkraftmaschine 1 stromaufwärts vor dem Dreiwegekatalysator 2 misst. Aus der so gemessenen Sauerstoffkonzentration kann die elektronische Motorsteuerung 5 dann ermitteln, ob das Sauerstoffspeichervermögen des Dreiwegekatalysators 2 ausgeschöpft ist.

In einer weiteren Variante der Erfindung ist zusätzlich stromabwärts des NOₓ-Speicherkatalysators 3 eine weitere Abgassonde 8 angeordnet, welche die Stickoxid- und Sauerstoffstoff-Konzentration stromabwärts des nach dem NOₓ-Speicherkatalysators 3 misst, um einen Durchschlag des NOₓ-Speicherkatalysators 3 erkennen zu können. Ein derartiger NOₓ-Durchschlag des NOₓ-Speicherkatalysators 3 tritt dann auf, wenn das absolute NOₓ-Speichervermögen des NOₓ-Speicherkatalysators 3 überschritten ist und die im Abgas der Brennkraftmaschine 1 enthaltenen Stickoxide somit nicht mehr in den NOₓ-Speicherkatalysator eingespeichert werden können.

Schließlich ist im Ansaugbereich der Brennkraftmaschine noch ein Luftmassensensor 9 angeordnet, der den Luftmassenstrom Q misst.

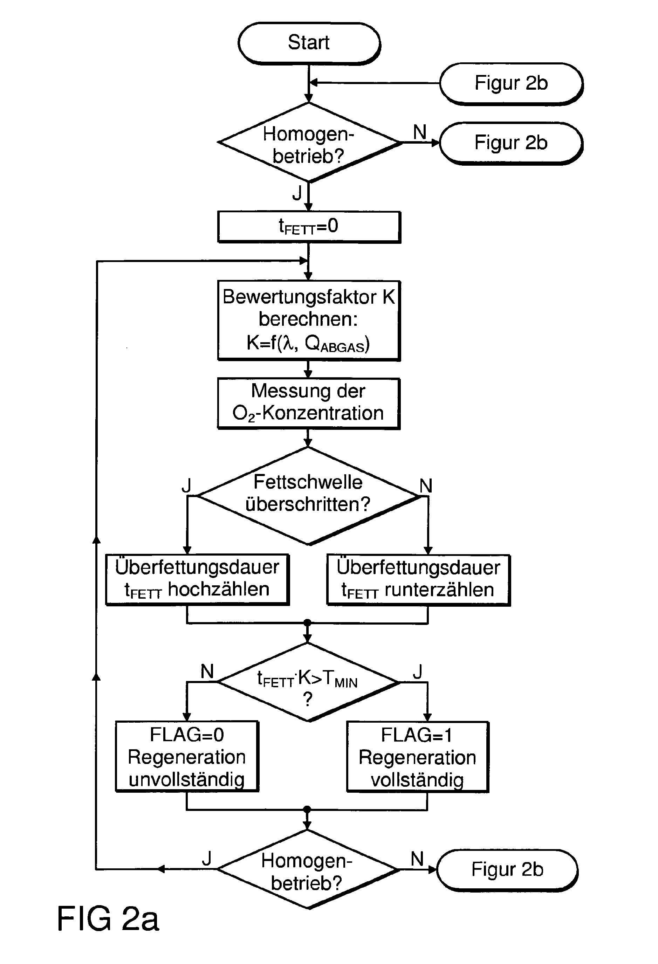

Im folgenden wird nun das erfindungsgemäße Regenerationsverfahren anhand der Flussdiagramme in den Figuren 2a - 2c erläutert.

Zu Beginn des erfindungsgemäßen Regenerationsverfahrens wird zunächst überprüft, ob sich die Brennkraftmaschine 1 im Homogenbetrieb befindet.

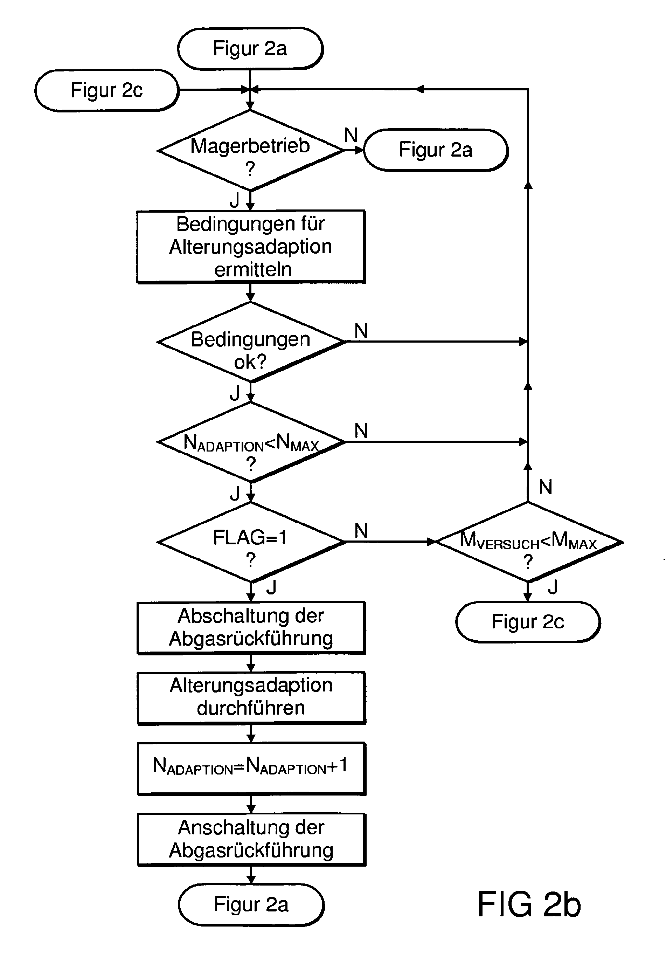

Falls diese Überprüfung ergibt, dass sich die Brennkraftmaschine 1 nicht im Homogenbetrieb befindet, so wird zu dem Verfahrensabschnitt in Figur 2b übergegangen, der den Magerbetrieb der Brennkraftmaschine 1 darstellt und später noch detailliert erläutert wird.

Falls die Überprüfung dagegen ergibt, dass die Brennkraftmaschine 1 in den Homogenbetrieb übergegangen ist, so wird zunächst die Überfettungsdauer t_{FETT} auf Null gesetzt.

Anschließend wird dann in einer Schleife die Sauerstoffkonzentration gemessen.

Darüber hinaus berechnet die elektronische Steuereinheit 5 in der Schleife aus dem Luftverhältnis λ und dem Abgasmassenstrom Q_{Abgas} Bewertungsfaktor K mit dem die gemessene Überfettungsdauer T_{FETT} anschließend gewichtet wird, wobei der Abgasmassenstrom Q_{ABGAS} aus dem Luftmassenstrom Q erhalten wird.

Beim Überschreiten der Fettschwelle wird die Überfettungsdauer t_{FETT} dann in der Schleife hochgezählt, wohingegen die Überfettungsdauer t_{FETT} beim Unterschreiten der Fettschwelle heruntergezählt wird.

Anschließend wird das Produkt aus dem Bewertungsfaktor K und der Anfettungsdauer t_{FETT} mit einem Grenzwert T_{MIN} verglichen, um zu ermitteln, ob die Regeneration des NOₓ-Speicherkatalysators 3 vollständig war.

Bei einem Überschreiten des Grenzwertes T_{MIN} wird eine vollständige Regeneration des NOₓ-Speicherkatalysators 3 angenommen, so dass die Variable FLAG auf den Wert FLAG=1 gesetzt wird.

Bei einem Unterschreiten des vorgegebenen Grenzwertes T_{MIN} wird dagegen eine unvollständige Regeneration des NOₓ-Speicherkatalysators 3 angenommen, so dass die Variable FLAG auf den Wert FLAG=0 gesetzt wird.

Anschließend wird dann geprüft, ob der Homogenbetrieb beendet ist, wobei ggf. zu dem in Figur 2b dargestellten Verfahrensabschnitt übergegangen, der - wie schon eingangs erwähnt - den Magerbetrieb der Brennkraftmaschine 1 beschreibt.

Zu Beginn dieses Verfahrensabschnitts wird deshalb zunächst geprüft, ob ein Magerbetrieb vorliegt.

Falls dies nicht der Fall, so wird wieder zu dem Verfahrensabschnitt in Figur 2a übergegangen, der den Homogenbetrieb beschreibt und bereits vorstehend detailliert beschrieben wurde.

Andernfalls wird dagegen geprüft, ob die Bedingungen für eine Alterungsadaption erfüllt sind, um eine nutzlose Alterungsadaption und eine unnötige Vervollständigung des Regenerationsgrads zu vermeiden. Dies ist sinnvoll, da sowohl eine Alterungsadaption als auch eine Vervollständigung des Regenerationsgrads des NOₓ-Speicherkatalysators 3 zu einer Erhöhung des Kraftstoffverbrauchs führt und mit zusätzlichen Abgasemissionen verbunden ist. Falls die Bedingungen für eine Alterungsadaption nicht erfüllt sind, so wird in einer Schleife wieder zu dem Beginn des Verfahrensabschnitts in Figur 2b übergegangen.

Andernfalls wird in einem weiteren Schritt geprüft, ob die Anzahl N_{ADAPTION} der bereits erfolgten Alterungsadaptionen einen vorgegebenen Maximalwert N_{MAX} überschreitet, da die Anzahl der während eines Fahrzyklus zulässigen Alterungsadaptionen begrenzt ist, um einen übermäßigen Anstieg des Kraftstoffverbrauchs und der Abgasemissionen zu vermeiden. Falls der Maximalwert N_{MAX} erreicht ist, so erfolgt keine weitere Alterungsadaption und es wird in einer Schleife wieder zu dem Beginn des Verfahrensabschnitts in Figur 2b übergegangen.

Andernfalls wird dagegen anhand der Variable FLAG geprüft, ob die vorangegangene Regeneration des NOₓ-Speicherkatalysators 3 während des in Figur 2a gezeigten Homogenbetriebs vollständig war.

Falls dies der Fall ist, so kann wahlweise zunächst die Abgasrückführung abgeschaltet werden. Zum einen ermöglicht die Abschaltung der Abgasrückführung eine Verringerung der Rohemissionsschwankungen, da die Toleranzeinflüsse der Abgasrückführung auch die NOₓ-Emissionen wegfallen. Zum anderen kann durch die höhere NOₓ-Emission die Einspeicherzeit bis zur Regenerationsauslösung verkürzt werden, wodurch die Wahrscheinlichkeit einer erfolgreichen Adaption erhöht wird.

Anschließend kann dann in herkömmlicher Weise eine Alterungsadaption erfolgen, wobei das alterungsabhängige Speichervermögen des NOₓ-Speicherkatalysators 3 ermittelt wird.

Nach dieser Alterungsadaption wird dann die Abgasrückführung wieder angeschaltet und zu dem Verfahrensabschnitt in Figur 2a übergegangen, der den Homogenbetrieb der Brennkraftmaschine 1 beschreibt.

Falls die Überprüfung der Variable FLAG dagegen ergibt, dass die vorangegangene Regeneration des NOₓ-Speicherkatalysators 3 während des in Figur 2a dargestellten Homogenbetriebs nicht vollständig war, so erfolgt zunächst keine Alterungsadaption, da die Bestimmung des Alterungszustandes des NOₓ-Speicherkatalysators 3 durch die Restbeladung des NOₓ-Speicherkatalysators 3 mit Stickoxiden verfälscht würde.

In einem solchen Fall müsste die Regeneration des NOₓ-Speicherkatalysators 3 zunächst vervollständigt werden, um eine korrekte Alterungsadaption zu ermöglichen, da eine Restbeladung des NOₓ-Speicherkatalysators 3 mit Stickoxiden die Alterungsadaption verfälscht.

Während eines Fahrzyklus darf die Regeneration des NOₓ-Speicherkatalysators 3 jedoch nicht beliebig oft vervollständigt werden, da der Kraftstoffverbrauch und die Abgasemissionen durch jede aktive Vervollständigung der Regeneration erhöht werden. Es wird deshalb die Zahl M_{VERSUCH} der bereits erfolgten Regenerationsvervollständigungen mit einem vorgegebenen Maximalwert M_{MAX} verglichen.

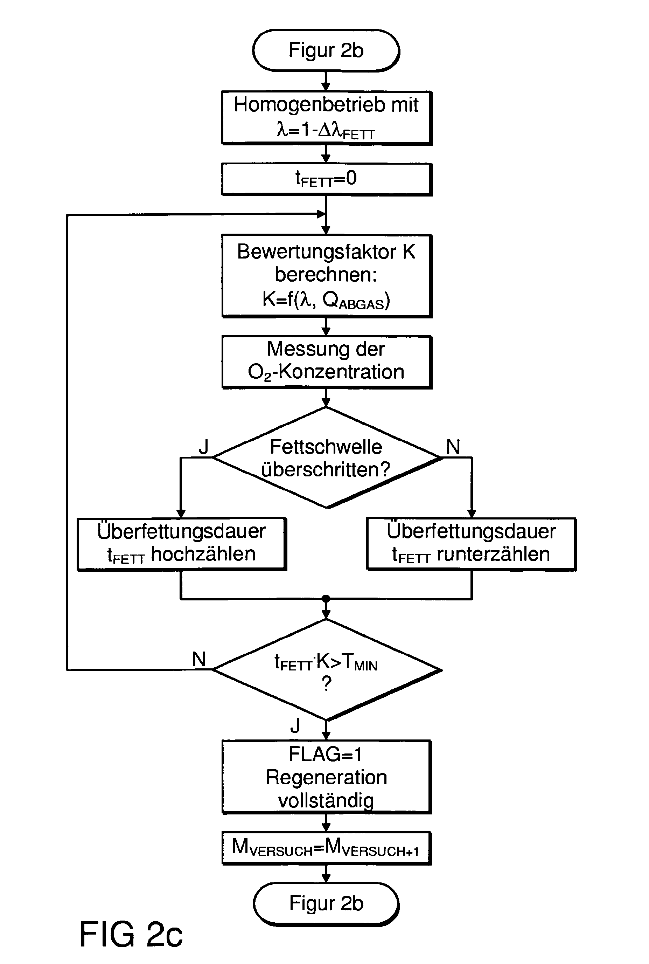

Falls der Maximalwert M_{MAX} noch nicht erreicht ist, so wird zu dem Verfahrensabschnitt in Figur 2c übergegangen, in dem die Regeneration des NOₓ-Speicherkatalysators 3 aktiv vervollständigt wird, wie noch detailliert beschrieben wird.

Falls der Maximalwert M_{MAX} dagegen bereits erreicht ist, so wird eine weitere Vervollständigung der Regeneration gesperrt und stattdessen in einer Schleife zu dem Beginn des Verfahrensabschnitts in Figur 2b übergegangen.

Im folgenden wird nun der in Figur 2c dargestellte Verfahrensabschnitt beschrieben, in dem die Regeneration des NOₓ-Speicherkatalysators 3 aktiv vervollständigt wird.

Hierzu wird die Brennkraftmaschine 1 in einem fettgetrimmten Homogenbetrieb gefahren, was zu einer Regeneration des NOₓ-Speicherkatalysators 3 führt.

Hierbei wird in einer Schleife laufend die Sauerstoffkonzentration gemessen, um einen Fettdurchschlag erkennen zu können.

Nach einem Fettdurchschlag wird der Homogenbetrieb noch so lange fortgesetzt, bis die Regeneration des NOₓ-Speicherkatalysators 3 vollständig ist. Die Vollständigkeit der Regeneration wird hierbei in der gleichen Weise beurteilt wie in dem Verfahrensabschnitt in Figur 2a, so dass diesbezüglich auf die vorstehende Beschreibung verwiesen wird.

Nach der Vervollständigung der Regeneration des NOₓ-Speicherkatalysators 3 wird dann die Variable FLAG auf den Wert FLAG=1 gesetzt, um eine vollständige Regeneration des NOₓ-Speicherkatalysators 3 anzuzeigen.

Schließlich wird dann zu dem Verfahrensabschnitt in Figur 2b übergegangen, in dem dann ggf. eine Alterungsadaption erfolgen kann.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen.

## Patentansprüche

1. Regenerationsverfahren für einen Speicherkatalysator (3) einer Brennkraftmaschine (1), bei dem der Speicherkatalysator (3) regeneriert wird, wobei
- nach der Regeneration des Speicherkatalysators (3) der Regenerationsgrad des Speicherkatalysators (3) ermittelt wird und
- das alterungsbedingte Speichervermögen des Speicherkatalysators (3) ermittelt wird, wenn der ermittelte Regenerationsgrad des Speicherkatalysators (3) einen vorgegebenen Minimalwert überschreitet,
**dadurch gekennzeichnet,**
**dass** Voraussetzungen für eine Ermittlung des alterungsbedingten Speichervermögens des Speicherkatalysators (3) überprüft werden, wobei die Regeneration des Speicherkatalysators (3) vervollständigt wird, wenn die Voraussetzungen für die Ermittlung des alterungsbedingten Speichervermögens des Speicherkatalysators (3) erfüllt sind.

2. Regenerationsverfahren nach Anspruch 1,
**dadurch gekennzeichnet,**
**dass** die Regeneration des Speicherkatalysators (3) vervollständigt wird, falls der ermittelte Regenerationsgrad einen vorgegebenen Minimalwert (T_{MIN}) unterschreitet.

3. Regenerationsverfahren nach Anspruch 1 oder 2,
**dadurch gekennzeichnet,**
**dass** die Voraussetzungen für die Ermittlung des alterungsbedingten Speichervermögens des Speicherkatalysators (3) in Abhängigkeit von mindestens einem Betriebsparameter der Brennkraftmaschine überprüft werden.

4. Regenerationsverfahren nach Anspruch 3,
**dadurch gekennzeichnet,**
**dass** die Voraussetzungen für die Ermittlung des alterungsbedingten Speichervermögens des Speicherkatalysators (3) in Abhängigkeit von mindestens einem der folgenden Betriebsparameter überprüft werden:
- Temperatur des Speicherkatalysators (3)
- Luftverhältnis der Brennkraftmaschine (1)
- Umgebungsdruck
- Fahrgeschwindigkeit eines von der Brennkraftmaschine (1) angetriebenen Kraftfahrzeugs.

5. Regenerationsverfahren nach einem der Ansprüche 1 bis 4, **gekennzeichnet durch**
eine Abgasrückführung, wobei die Abgasrückführung vor der Ermittlung des alterungsbedingten Speichervermögens des Speicherkatalysators (3) abgeschaltet und/oder nach der Ermittlung des alterungsbedingten Speichervermögens des Speicherkatalysators (3) wieder angeschaltet wird.

6. Regenerationsverfahren nach einem der Ansprüche 1 bis 5,
**dadurch gekennzeichnet,**
**dass** die Brennkraftmaschine (1) zur Regeneration des Speicherkatalysators (3) mit einem unterstöchiometrischen Luftverhältnis betrieben wird.

7. Regenerationsverfahren nach Anspruch 6,
**gekennzeichnet durch**
folgende Schritte:
- Messung der Sauerstoffkonzentration im Abgas der Brennkraftmaschine (1) während der Regeneration des Speicherkatalysators (3)
- Vergleich der gemessenen Sauerstoffkonzentration mit einer vorgegebenen Fettschwelle
- Ermittlung der Zeitspanne (t_{FETT}) nach dem Erreichen der Fettschwelle
- Ermittlung des Regenerationsgrads des Speicherkatalysators (3) in Abhängigkeit von der ermittelten Zeitspanne (t_{FFTT}) nach dem Erreichen der Fettschwelle.

8. Regenerationsverfahren nach Anspruch 7,
**dadurch gekennzeichnet,**
**dass** der Regenerationsgrad des Speicherkatalysators (3) in Abhängigkeit von der Zeitspanne (t_{FETT}) ab dem Erreichen der Fettschwelle und in Abhängigkeit von mindestens einem Betriebsparameter der Brennkraftmaschine (1) ermittelt wird.

9. Regenerationsverfahren nach Anspruch 8,
**dadurch gekennzeichnet, dass** bei der Regeneration des Speicherkatalysators (3) das Luftverhältnis und/oder der Abgasmassenstrom als Betriebsparameter der Brennkraftmaschine (1) ermittelt wird und der Regenerationsgrad des Speicherkatalysators (3) in Abhängigkeit von dem Luftverhältnis und/oder dem Abgasmassenstrom ermittelt wird.

10. Regenerationsverfahren nach einem der Ansprüche 7 bis 9,
**dadurch gekennzeichnet,**
**dass** die Sauerstoffkonzentration im Abgas der Brennkraftmaschine (1) zwischen der Brennkraftmaschine (1) und einem Vorkatalysator (2) und/oder zwischen dem Vorkatalysator (2) und dem Speicherkatalysator (3) und/oder nach dem Speicherkatalysator (3) gemessen wird.

## Claims

1. Regeneration method for a storage catalyst (3) of an internal combustion engine (1) in which the storage catalyst (3) is regenerated, in which,
- after the regeneration of the storage catalyst (3) the degree of regeneration of the storage catalyst (3) is determined and
- the ageing-related storage capability of the storage catalyst (3) is determined when the degree of regeneration of the storage catalyst (3) is less than a predetermined minimum value,
**characterised in that**
the requirements for a determination of the ageing-related storage capability of the storage catalyst (3) are checked, with the regeneration of the storage catalyst (3) being supplemented if the conditions for the determination of the ageing-related storage capability of the storage catalyst (3) are fulfilled.

2. Regeneration method according to claim 1,
**characterised in that**
the regeneration of the storage catalyst (3) is supplemented if the level of regeneration determined becomes less than a predetermined minimum value (T_{MIN}).

3. Regeneration method according to claim 1 or 2,
**characterised in that**
the requirements for determining the ageing-related storage capability of the storage catalyst (3) are checked as a function of at least one operating parameter of the internal combustion engine.

4. Regeneration method according to claim 3,
**characterised in that**
the requirements for determining the ageing-related storage capability of the storage catalyst (3) are checked as a function of at least one of the following operating parameters:
- Temperature of the storage catalyst (3)
- Air/fuel ratio of the internal combustion engine (1)
- Ambient pressure
- Road speed of a motor vehicle driven by the internal combustion engine (1).

5. Regeneration method according to one of the claims 1 to 4,
**characterised by**
an exhaust gas recirculation, with the exhaust gas recirculation being switched off before the determination of the ageing-related storage capability of the storage catalyst (3) and/or switched on again after the determination of the ageing-related storage capability of the storage catalyst (3).

6. Regeneration method according to one of the claims 1 to 5,
**characterised in that,**
for regeneration of the storage catalyst (3), the internal combustion engine (1) is operated with a substoichiometric air/fuel ratio.

7. Regeneration method according to claim 6,
**characterised by**
the following steps
- Measuring the oxygen concentration in the exhaust gas of the internal combustion engine (1) during the regeneration of the storage catalyst (3)
- Comparing the measured oxygen concentration with a predetermined rich mixture threshold
- Determining the period of time (t_{FETT}) after the rich mixture threshold is reached
- Determining the degree of regeneration of the storage catalyst (3) as a function of the period of time (t_{FETT}) determined after the rich mixture threshold is reached.

8. Regeneration method according to claim 7,
**characterised in that,**
the level of regeneration of the storage catalyst (3) is determined as a function of the period of time (t_{FETT}) between reaching the rich mixture threshold and as a function of at least one operating parameter of the internal combustion engine (1).

9. Regeneration method according to claim 8,
**characterised in that,**
in the regeneration of the storage catalyst (3) the air/fuel ratio and/or the exhaust gas mass flow are determined as operating parameters of the internal combustion engine (1) and the degree of regeneration of the storage catalyst (3) is determined as a function of the air/fuel ratio and/or the exhaust gas mass flow.

10. Regeneration method according to one of the claims 7 to 9,
**characterised in that**
the oxygen concentration in the exhaust gas of the internal combustion engine (1) is measured between the internal combustion engine (1) and a preliminary catalyst (2) and/or between the preliminary catalyst (2) and the storage catalyst (3) and/or after the storage catalyst (3).

## Revendications

1. Procédé de régénération pour un catalyseur accumulateur (3) d'un moteur à combustion interne (1) au cours duquel le catalyseur accumulateur (3) est régénéré, dans lequel,
- après la régénération du catalyseur accumulateur (3), le taux de régénération du catalyseur accumulateur (3) est déterminé et
- la capacité d'accumulation du catalyseur accumulateur (3) qui résulte du vieillissement est déterminée lorsque le taux de régénération du catalyseur accumulateur qui a été déterminé est supérieur à une valeur minimale prédéterminée,
**caractérisé**
**en ce que** les conditions pour une détermination de la capacité d'accumulation du catalyseur accumulateur (3) sont contrôlées, la régénération du catalyseur accumulateur (3) étant complétée lorsque les conditions pour la détermination de la capacité d'accumulation du catalyseur accumulateur qui résultent du vieillissement sont remplies.

2. Procédé de régénération selon la revendication 1,
**caractérisé**
**en ce que** la régénération du catalyseur accumulateur (3) est complétée si le taux de régénération du catalyseur accumulateur (3) qui a été déterminé est inférieur à une valeur minimale prédéterminée (T_{MIN}).

3. Procédé de régénération selon la revendication 1 ou 2,
**caractérisé**
**en ce que** les conditions pour la détermination de la capacité d'accumulation du catalyseur accumulateur (3) qui résulte du vieillissement sont contrôlées en fonction d'au moins un paramètre de fonctionnement du moteur à combustion interne.

4. Procédé de régénération selon la revendication 3,
**caractérisé**
**en ce que** les conditions pour la détermination de la capacité d'accumulation du catalyseur accumulateur (3) qui résulte du vieillissement sont contrôlées en fonction d'au moins un des paramètres de fonctionnement suivants
- température du catalyseur accumulateur (3)
- rapport d'air du moteur à combustion interne (1)
- pression ambiante
- vitesse de marche d'un véhicule entraîné par le moteur à combustion interne (1).

5. Procédé de régénération selon une des revendications 1 à 4,
**caractérisé par**
un recyclage des gaz d'échappement, le recyclage des gaz d'échappement étant interrompu avant la détermination de la capacité d'accumulation du catalyseur accumulateur (3) qui résulte du vieillissement et/ou étant remis en marche après la détermination de la capacité d'accumulation du catalyseur accumulateur (3) qui résulte du vieillissement

6. Procédé de régénération selon une des revendications 1 à 5,
**caractérisé**
**en ce que**, pour la régénération du catalyseur accumulateur (3), le moteur à combustion interne (1) est mis en fonctionnement avec un rapport d'air sous-stoechiométrique.

7. Procédé de régénération selon la revendication 6,
**caractérisé**
**par** les étapes suivantes :
- mesure de la concentration d'oxygène dans les gaz d'échappement du moteur à combustion interne (1) pendant la régénération du catalyseur accumulateur (3)
- comparaison de la concentration d'oxygène mesurée avec un seuil de richesse prédéterminé
- détermination de la période (t_{FETT}) après l'atteinte du seuil de richesse
- détermination du taux de régénération du catalyseur accumulateur (3) en fonction de la période (t_{FETT}) déterminée après l'atteinte du seuil de richesse.

8. Procédé de régénération selon la revendication 7,
**caractérisé**
**en ce que** le taux de régénération du catalyseur accumulateur (3) est déterminé en fonction de la période (t_{FETT}) mesurée à partir de l'atteinte du seuil de richesse et en fonction d'au moins un paramètre de fonctionnement du moteur à combustion interne (1)

9. Procédé de régénération selon la revendication 8,
**caractérisé**
**en ce que**, lors de la régénération du catalyseur accumulateur (3), le rapport d'air et/ou le débit massique des gaz d'échappement sont déterminés en tant que paramètres de fonctionnement du moteur à combustion interne (1) et le taux de régénération du catalyseur accumulateur (3) est déterminé en fonction du rapport d'air et/ou du débit massique des gaz d'échappement.

10. Procédé de régénération selon une des revendication 7 à 9,
**caractérisé**
**en ce que** la concentration d'oxygène dans les gaz d'échappement du moteur à combustion interne (1) est mesurée entre le moteur à combustion interne (1) et un précatalyseur (2) et/ou entre le précatalyseur (2) et le catalyseur accumulateur (3) et/ou en aval du catalyseur accumulateur (3).
